# EUROPÄISCHE PATENTSCHRIFT

(11) **EP 2 738 713 B1**
(45) Veröffentlichungstag und Bekanntmachung des Hinweises auf die Patenterteilung: **26.02.2020**
(21) Anmeldenummer: 13005029.7
(22) Anmeldetag: 21.10.2013
(51) Int. Cl.: G06K 19/073

(54) **Tube Tag mit Schalter**
Tube tag with switch
Tube tag avec commutateur

(30) Priorität: 30.11.2012 DE 102012023445
(43) Veröffentlichungstag der Anmeldung: 04.06.2014
(73) Patentinhaber: Giesecke+Devrient Mobile Security GmbH, 81677 München (DE)
(72) Erfinder: Finkenzeller, Klaus, 85774 Unterföhring (DE); Baldischweiler, Michael, 81825 München (DE)

(56) Entgegenhaltungen:
- JP-A- 2004 348 500
- US-A1- 2008 284 606
- US-A1- 2010 230 018
- US-A1- 2010 230 309

## Beschreibung

Die Erfindung offenbart einen Transponder und ein Verfahren zur Herstellung des Transponders, welcher robust gegenüber äußeren mechanischen Einflüssen ist. Insbesondere ist der Transponder kontrolliert ansprech- und auslesbar.

Bekannt nach dem Stand der Technik sind elektrisch abgeschirmte magnetische Loop-Antennen. Diese werden beispielsweise aus einem Koaxialkabel hergestellt, wobei der Innenleiter als magnetische Antenne dient und der Schirm des Koaxialkabels der Abschirmung statischer elektrischer Felder dient.

Dies führt zur Erkenntnis, dass eine röhrenförmige, leitfähige und nicht ferromagnetische Abschirmung um eine Spulenwindung keinen, oder nur geringen Einfluss auf die magnetische Kopplung mit einem externen (elektro-) magnetischen Feld ausübt. Entscheidend für die Kopplung mit einem externen magnetischen Feld ist dabei, dass diese Abschirmung keine geschlossene Spulenwindung darstellt, da ansonsten ein Strom fließen würde, welcher unerwünscht auf die umschlossene Spulenwindung zurückwirken würde.

Ein bekanntes Problem von kontaktlosen Chipkarten und kontaktlosen Datenträgern besteht darin, dass diese aus der Entfernung vom Besitzer unbemerkt, zum Beispiel durch eine Tasche hindurch, ausgelesen werden können. Besonders kritisch ist hierbei die Möglichkeit einer sogenannten Relais-Attacke, da hier über eine Funkstrecke eine Verbindung zu einem Lesegerät eines Angreifers aufgebaut wird.

Ein grundsätzliches Problem von Chipkarten, wie z.B. RFID-Tags ist die Möglichkeit eines unkontrollierten Auslesens des Tags durch einen Angreifer. Dies ist einerseits problematisch hinsichtlich der zu schützenden Daten. Andererseits ist es problematisch hinsichtlich des Einsatzes von kontaktlosen Karten für z.B. Anwendungen im Zahlungsverkehr.

Ein besonderes Problem stellt hierbei die zunehmende Anzahl von NFCfähigen Mobiltelefonen auf dem Markt dar. Da ein NFC-Telefon sowohl als Lesegerät als auch als Karte konfiguriert werden kann und dabei über eine leistungsfähige Netzwerkanbindung, z.B. Internet, verfügt, stellt es die ideale Plattform für Relais-Angriffe dar. Dazu erfordert es lediglich Software, z.B. in Form von Applets, die in der Lage ist, auf einen NFC-Protokollstack zuzugreifen. Der Angreifer ist dabei auch in der Lage wichtige Protokollparameter des sogenannten Physical-Layers, also des Transportprotokolls, z.B. gemäß ISO/ IEC 14443-2 und -3, zu beeinflussen. So kann zum Beispiel die sogenannte "frame waiting time" heraufgesetzt werden, um Laufzeiten im Netzwerk auszugleichen, oder es können nach Belieben "frame waiting time extensions" eingefügt werden.

Als Abwehrmaßnahme gegen Relais-Attacken sind bereits verschiedene Möglichkeiten bekannt, welche ausführlich im Stand der Technik beschrieben sind.

Aus der Druckschrift JP 2004 348500 A ist beispielsweise ein Gerät zur Aufnahme von mindestens einer IC-Karte bekannt, wobei dieses Gerät eine spiralförmige, leitende Wicklung umfasst, welche sich auf einer Fläche des Geräts befindet. Die beiden Enden der Wicklung sind mittels eines Schalters, der als Öffner ausgeführt ist, verbindbar, so dass die Windung zwischen deren Enden kurzgeschlossen werden kann, wodurch bei einem nicht autorisierten Ausleseversuch durch ein entsprechendes Lesegerät infolge der durch das Lesegerät ausgesendeten elektromagnetischen Wellen ein Strom in der Wicklung induziert wird, welcher ein Magnetfeld hervorruft, wodurch ein Auslesen der IC-Karte verhindert werden kann.

Ausgehend vom Stand der Technik ist es Aufgabe der Erfindung einen Transponder so auszugestalten, dass dieser robust und unempfindlich gegenüber mechanischen Einflüssen bzw. Einwirkungen ist. Ferner soll die Erfindung die Aufgabe lösen, dass der Transponder kontrolliert ansprech- und auslesbar ist.

Die Aufgabe der Erfindung wird durch den unabhängigen Anspruch und den nebengeordneten Anspruch gelöst. Vorteilhafte Ausführungen sind in den abhängigen Ansprüchen beschrieben.

Zur Lösung der Aufgabe offenbart die Erfindung einen Transponder, welcher folgende Elemente umfasst. Der erfindungsgemäße Transponder umfasst mindestens eine metallische Abschirmung mit mindestens einer Unterbrechung. Die metallische Abschirmung umgibt mindestens eine Antennenspule, wobei die Antennenspule mindestens eine Windung umfasst. Mit der Antennenspule und/ oder der metallischen Abschirmung ist mindestens ein Chip verbunden. Die mindestens eine Unterbrechung der metallischen Abschirmung wird von mindestens einem Schalter im nicht betätigten Zustand überbrückt. Somit entsteht im nicht betätigten Zustand des Schalters ein geschlossener Stromkreis in der metallischen Abschirmung, so dass in diesem Zustand der Transponder von außen nicht ansprechbar ist. Vorteilhaft ist, dass der Transponder nur dann ausgelesen werden kann, wenn der Schalter betätigt wird und somit ein ungewolltes Auslesen des Transponders zumindest erschwert wenn nicht sogar verhindert werden kann. Ein Zugriff auf die Daten des Transponders zum Lesen oder Schreiben ist deshalb nur möglich, wenn der Benutzer den Schalter betätigt. Darüber hinaus verfügt der erfindungsgemäße Transponder über eine mechanisch stabile Struktur, die es erlaubt, dass der Transponder auch in einer Umgebung eingesetzt wird, wo hohe mechanische Einflüsse und Kräfte auf den Transponder wirken können.

Als vorteilhafte Ausführungsform offenbart die Erfindung, dass die metallische Abschirmung ringförmig oder rechteckförmig ausgebildet ist.

Als weitere vorteilhafte Ausführungsform offenbart die Erfindung, dass die Unterbrechung auf mindestens einer metallischen Leiterbahn vorhanden ist.

Als weitere vorteilhafte Ausführungsform offenbart die Erfindung, dass mindestens an der Stelle der Unterbrechung mindestens eine elektrisch leitende Verbindung zwischen den mindestens zwei parallel zueinander liegenden metallischen Leiterbahnen angeordnet ist.

Als weitere vorteilhafte Ausführungsform offenbart die Erfindung, dass der Schalter mindestens ein Verbindungselement ist, welches die Unterbrechung elektrisch leitend überbrückt.

Als weitere vorteilhafte Ausführungsform offenbart die Erfindung, dass der Schalter ein Öffner oder ein Schließer ist.

Als weitere vorteilhafte Ausführungsform offenbart die Erfindung, dass der Schalter eingerichtet ist, um eine kontaktlose und/ oder eine kontaktgebundene Verbindung herzustellen.

Als weitere vorteilhafte Ausführungsform offenbart die Erfindung, dass der Schalter eingerichtet ist, um als kontaktlose Verbindung eine kapazitive Kopplung herzustellen.

Als weitere vorteilhafte Ausführungsform offenbart die Erfindung, dass der Schalter eingerichtet ist, um als eine kontaktgebundene Verbindung eine ohmsche Verbindung herzustellen.

Als weitere vorteilhafte Ausführungsform offenbart die Erfindung, dass der Schalter ein einstellbarer ohmscher Widerstand ist.

Als weitere vorteilhafte Ausführungsform offenbart die Erfindung, dass der einstellbare ohmsche Widerstand einen Wert im Bereich von 0,1 bis 1 Kiloohm aufweist, um die Ansprechempfindlichkeit des Transponders einzustellen.

Ferner offenbart die Erfindung zur Lösung der Aufgabe ein Verfahren zur Herstellung eines Transponders gemäß den oben genannten Merkmalen.

Darüber hinaus offenbart die Erfindung als vorteilhafte Anwendung der Erfindung ein Passbuch mit einem Transponder gemäß den oben genannten Merkmalen, wobei das Passbuch so eingerichtet ist, dass im geschlossenen Zustand des Passbuchs das mindestens eine Verbindungselement so auf der mindestens einen Unterbrechung der mindestens einen metallischen Abschirmung zu liegen kommt, dass ein geschlossener Stromkreis in der mindestens einen metallischen Abschirmung entsteht und damit der Transponder von außen nicht ansprechbar ist.

Im Folgenden werden Ausführungsbeispiele der Erfindung anhand der beigefügten Figuren detailliert beschrieben.

Es zeigen
Figur 1 das Prinzip eines erfindungsgemäßen Transponders mit Schalter,
Figur 2 ein Ausführungsbeispiel eines Schalters für den erfindungsgemäßen Transponder,
Figur 3 ein erstes Ausführungsbeispiel für eine Integration eines erfindungsgemäßen Transponders in einem Passbuch,
Figur 4 ein zweites Ausführungsbeispiel für eine Integration eines erfindungsgemäßen Transponders in einem Passbuch.

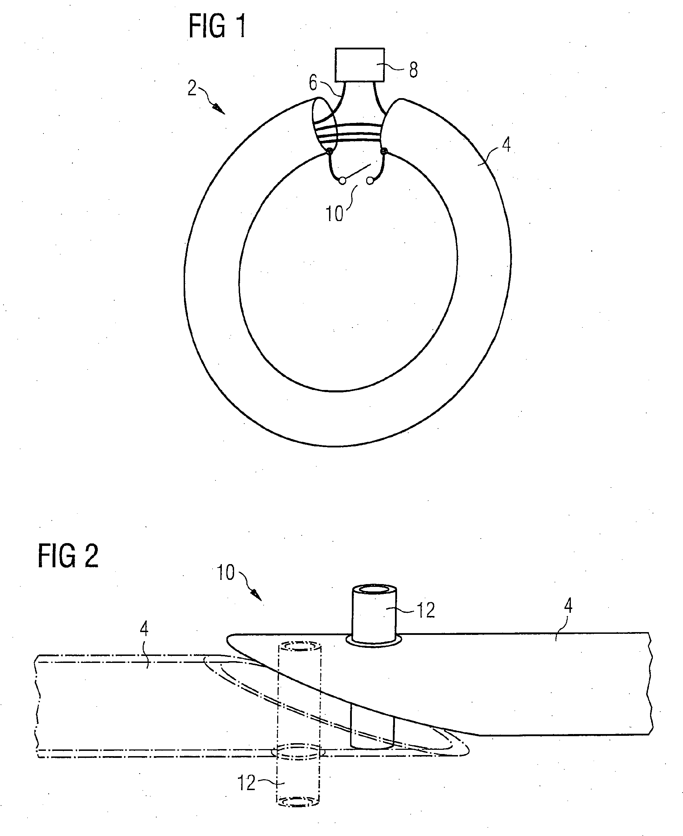

Figur 1 offenbart den prinzipiellen Aufbau eines erfindungsgemäßen Transponders 2 mit einem Schalter 10. Der Transponder 2 besteht aus einem metallischen, ringförmig oder rechteckförmig (nicht abgebildet) um ca. 360° gebogenen Metallrohr 4 als metallische Abschirmung, einem Transponderchip 8 und einer Antennenspule 6. Die Enden des Metallrohrs 4 liegen zwar gegenüber, berühren sich aber nicht. Ferner kann der Chip 8, welcher sich zwischen den Enden des Metallrohrs 4 befindet, mittels einer nicht dargestellten Abdeckung umhüllt werden. Alternativ kann sich der Chip 8 auch im Metallrohr 4 mit der Antennenspule 6 befinden. Der Chip 8 ist mit der Antennenspule 6 verbunden. Der Schalter 10 ist zwischen den beiden Enden des Metallrohrs 4 angeschlossen, d.h. der Schalter 10 verbindet bei Betätigung die beiden Enden des Metallrohrs 4 elektrisch leitend, wenn der Schalter 10 ein Schließer ist bzw. unterbricht die elektrisch leitende Verbindung, wenn er ein Öffner ist. Die Antennenspule 6 besteht aus mindestens einer Windung
eines isolierten Drahtes. Optional kann ein Ende der Antennenspule 6 zusätzlich mit einem Ende des Metallrohrs 4 verbunden sein. Die Antennenspule 6 ist so ausgelegt, dass der Transponder im HF-Bereich, beispielsweise bei 13,56 MHz, eingesetzt werden kann. Es ist aber auch jede andere geeignete Frequenz möglich.

Erfindungsgemäß angewendet wird nun jedoch der Effekt, dass eine elektrisch leitende Verbindung zwischen den beiden Enden des ringförmigen Metallrohrs 4 eine sogenannte Einwindungsspule erzeugt. In der Einwindungsspule wird durch ein äußeres elektromagnetisches Feld eines Lesegerätes, z.B. eines Angreifers, ein Strom induziert. Der in der Einwindungsspule induzierte Strom erzeugt selbst ein magnetisches Feld, welches dem von außen anliegenden elektromagnetischen Feld entgegen wirkt und löscht damit das magnetische Feld im Inneren des Metallrohrs 4 vollkommen aus gemäß der Lenzschen Regel. Ferner löscht das Metallrohr 4, dessen Enden elektrisch leitend verbunden sind, gemäß dem Effekt des Faradayschen Käfigs das elektromagnetische Feld im Inneren des Metallrohrs 4 vollständig aus. Diese Auslöschung bewirkt, dass der im Inneren des Metallrohrs 4 befindliche Transponder 2, insbesondere die Antennenspule 6 und der Chip 8, von außen mittels eines Lesegeräts nicht mehr ansprechbar ist.

Erfindungsgemäß wird der Transponder 2 so ausgelegt, dass eine elektrisch leitende Verbindung mittels eines Schalters 10 zwischen den beiden Enden des ringförmigen Metallrohrs 4 zeitweise hergestellt werden kann, oder zeitweise unterbrochen werden kann.

Soll ein Transponder 2, zum Beispiel im Einsatz für den Zahlungsverkehr, im Normalfalle, also ohne Interaktion eines Benutzers, nicht ausgelesen werden können, so sind die beiden Enden des Metallrohrs 4 im Ruhezustand
elektrisch leitend miteinander verbunden. Um den Transponder 2 für eine Transaktion zu aktivieren, ist erfindungsgemäß vorgesehen, die elektrisch leitende Verbindung zwischen den Enden des Metallrohrs 4 auf eine Interaktion des Benutzers hin, zeitweise zu unterbrechen. Im einfachsten Fall kann hierzu ein elektrischer Schalter 10, z. B. ein Öffner, eingesetzt werden.

In Figur 2 ist ein erfindungsgemäßes Ausführungsbeispiel eines Schalters 10 für den Transponder 2 dargestellt. Hierbei sind die beiden Enden des Metallrohrs 4 angeschrägt und das Metallrohr 4 ringförmig so gebogen, dass die angeschrägten Enden im Ruhezustand aufeinander zu liegen kommen und somit eine elektrische Verbindung zwischen den beiden Rohrenden hergestellt wird. Der Transponder 2, insbesondere die Antennenspule 6 und der Chip 8, ist damit nicht ansprechbar. Durch zwei Kunststoffbolzen 12, welche die Rohrenden auf je einer Seite nach außen durchdringen, kann durch Drücken mit den Fingern eine Scherkraft eingebracht werden, welche die Rohrenden auseinanderdrückt und die elektrische Verbindung für die Zeit der Krafteinwirkung unterbricht. Der Transponder 2, insbesondere die Antennenspule 6 und der Chip 8, ist damit für die Zeit der Krafteinwirkung ansprechbar.

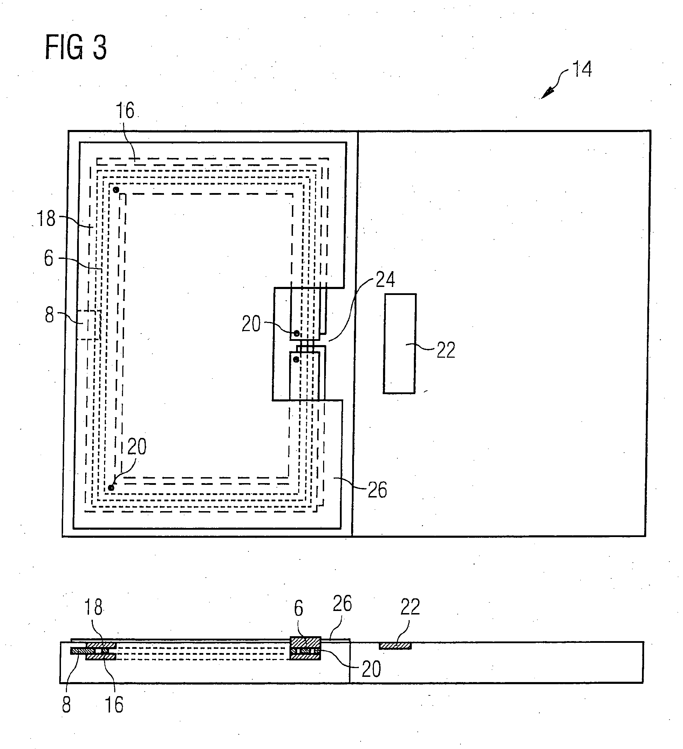

In Figur 3 ist ein erstes Ausführungsbeispiel für eine Integration eines erfindungsgemäßen Transponders 2 in einem Passbuch 14 dargestellt. Das Passbuch 14 ist im aufgeklappten Zustand dargestellt. Im oberen Teil von Figur 3 ist das Passbuch 14 in Draufsicht und im unteren Teil in einer Schnittansicht dargestellt. Das Metallrohr 4 ist als eine erste und zweite metallische Leiterbahn 16 und 18 ausgeführt. Allgemein können mehrere metallische Leiterbahnen übereinander geschichtet sein. Die metallischen Leiterbahnen 16 und 18 weisen mindestens eine Unterbrechung 24 auf. Zumindest an der Stelle der Unterbrechung 24 sind die Leiterbahnen 16 und 18 mittels mindestens
einer Durchkontaktierung 20 elektrisch leitend verbunden. Bevorzugt erfolgt die Durchkontaktierung 20 zwischen den Leiterbahnen 16 und 18 an mehreren Stellen entlang der Außenkanten der Leiterbahnen 16 und 18.

Die Antennenspule 6 wird durch eine Spulenstruktur gebildet, welche als Inlay zwischen den beiden Leiterbahnen 16 und 18 zu liegen kommt und räumlich so angeordnet ist, dass die Antennenspule 6 in der Draufsicht von den Leiterbahnen 16 und 18 vollständig abgedeckt wird. Die Antennenspule 6 ist mit Chip 8 verbunden.

Durch eine leitfähige Überbrückung der Unterbrechung 24 mittels eines Verbindungselements 22 kann der Transponder 2 im Passbuch 14 deaktiviert werden. Bei der Überbrückung mittels eines Verbindungselements 22 kann es sich um einen Schalter 10, z.B. ein Öffner oder Schließer, oder eine andere Art eines temporären elektrischen Kontaktes handeln, wie z.B. eine Leiterbahn.

Figur 3 zeigt ein Passbuch 14 mit einem kontaktlosen Chip 8, der nur dann ausgelesen werden kann, wenn das Passbuch 14 geöffnet ist. Die oberste ringförmige Leiterbahn 18 ist mindestens teilweise von einer isolierenden Folie 26 bedeckt. Die Unterbrechung 24 der Leiterbahn 16 und 18 ist dabei erfindungsgemäß nicht bedeckt, sondern die leitfähigen Flächen zumindest einer Leiterbahn 16,18 sind nach außen geführt. Ein leitfähiges Element als Verbindungselement 22 ist auf der der Antennenspule 6 gegenüber liegenden Seite des Passbuches 14 so angeordnet, dass es bei geschlossenem Passbuch 14 genau oberhalb der Unterbrechung 24 zu liegen kommt und die beiden Enden der Leiterbahn 16 und/ oder die Enden der Leiterbahn 18 galvanisch oder kapazitiv leitend miteinander verbindet. Hierdurch wird ein Stromkreis in der Leiterbahn 16 und/ oder 18 geschlossen, wodurch der Transponder nicht mehr ansprechbar ist.

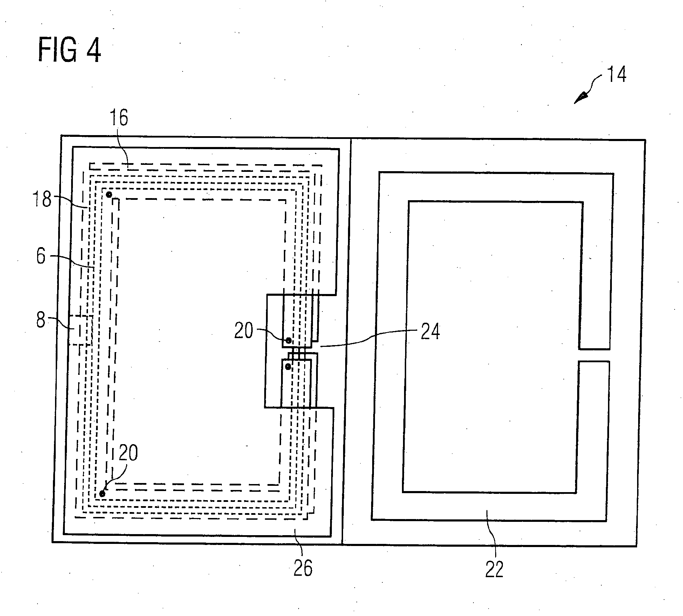

Figur 4 zeigt ein zweites Ausführungsbeispiel für eine Integration eines erfindungsgemäßen Transponders 2 in einem Passbuch 14. Hier ist die Leiterbahn 18 so großflächig ausgelegt, dass im geschlossenen Zustand des Passbuchs 14 eine kapazitive Kopplung zwischen der Leiterbahn 18 und dem Verbindungselement 22, das ebenfalls in Form einer Leiterbahn mit Unterbrechung ausgeführt ist, erzielt wird.

In einer weiteren Variante kann das Verbindungselement 22 auch als geschlossene, ringförmige,insbesondere rechteckförmige, Leiterbahn ausgeführt sein.

In einer Weiterbildung des erfindungsgemäßen Transponders wird der Schalter 10 des Transponders 2 durch eine einstellbare Impedanz ersetzt, insbesondere durch einen ohmschen Widerstand. Der Wert des Widerstandes wird bevorzugt im Bereich von 0,1 bis 1 kΩ einstellbar gewählt.

Durch die Wahl eines geeigneten Widerstandswertes kann dabei die Ansprechempfindlichkeit des Transponders 2 eingestellt werden. In Bezug auf ein bestimmtes Lesegerät bewirkt dies eine Veränderung und damit eine Einstellmöglichkeit für die Lesereichweite des Transponders 2.

Nimmt der Widerstand sehr kleine Werte an, so wird die Ansprechempfindlichkeit sehr groß, so dass der Transponder 2 schließlich nicht mehr ansprechbar ist, was einem kurzgeschlossenen Ring entspricht. Nimmt der Widerstand sehr große Werte an, so wird die Ansprechempfindlichkeit des Transponders kleiner bis sie schließlich nur durch die Eigenimpedanz des Transponderchips beeinflusst und nach unten begrenzt wird, was einem of-fenen Ring entspricht. Der Transponder weist dann die normale Leseentfernung auf.

### Bezugszeichenliste

- 2: Transponder
- 4: Metallrohr
- 6: Antennenspule
- 8: Chip
- 10: Schalter
- 12: Kunststoffbolzen
- 14: Passbuch
- 16: erste metallische Leiterbahn
- 18: zweite metallische Leiterbahn
- 20: Durchkontaktierung
- 22: Verbindungselement
- 24: Unterbrechung
- 26: isolierende Folie

## Patentansprüche

1. Transponder (2), welcher folgende Elemente umfasst:
- mindestens eine metallische Abschirmung (4) mit mindestens einer Unterbrechung (24),
- mindestens eine Antennenspule (6), welche mindestens eine Windung umfasst,
- mindestens einen Chip (8), der mit der mindestens einen Antennenspule (6) verbunden ist,
- mindestens einen Schalter (10), welcher eingerichtet ist, die mindestens eine Unterbrechung (24) zu überbrücken, so dass ein geschlossener Stromkreis in der metallischen Abschirmung (4) entsteht und der Transponder (2) von außen nicht ansprechbar ist, **dadurch gekennzeichnet, dass** die mindestens eine Antennenspule (6) von der metallischen Abschirmung (4) umgeben ist, indem die Abschirmung (4) entweder ein metallisches Rohr ist, dessen Enden sich an der Stelle der Unterbrechung (24) gegenüberliegen, sich aber nicht elektrisch leitend berühren, oder aus mindestens zwei parallel zu einander liegenden metallischen Leiterbahnen (16,18) besteht, wobei mindestens an der Stelle der Unterbrechung (24) mindestens eine elektrisch leitende Verbindung (20) zwischen den mindestens zwei parallel zueinander liegenden metallischen Leiterbahnen (16,18) angeordnet ist.

2. Transponder (2) nach Anspruch 1, **dadurch gekennzeichnet, dass** die metallische Abschirmung (4) ringförmig oder rechteckförmig ausgebildet ist.

3. Transponder (2) nach einem der vorhergehenden Ansprüche, **dadurch gekennzeichnet, dass** die Unterbrechung (24) auf mindestens einer metallischen Leiterbahn (16,18) vorhanden ist.

4. Transponder (2) nach einem der vorhergehenden Ansprüche, **dadurch gekennzeichnet, dass** der Schalter (10) mindestens ein Verbindungselement (22) ist, welches die Unterbrechung (24) überbrückt.

5. Transponder (2) nach einem der vorhergehenden Ansprüche, **dadurch gekennzeichnet, dass** der Schalter (10) ein Öffner oder ein Schließer ist.

6. Transponder (2) nach einem der vorhergehenden Ansprüche, **dadurch gekennzeichnet, dass** der Schalter (10) eingerichtet ist, um eine kontaktlose und/ oder eine kontaktgebundene Verbindung herzustellen.

7. Transponder (2) nach einem der vorhergehenden Ansprüche, **dadurch gekennzeichnet, dass** der Schalter (10) eingerichtet ist, um als kontaktlose Verbindung eine kapazitive Kopplung herzustellen.

8. Transponder (2) nach einem der vorhergehenden Ansprüche, **dadurch gekennzeichnet, dass** der Schalter (10) eingerichtet ist, um als eine kontaktgebundene Verbindung eine ohmsche Verbindung herzustellen.

9. Transponder (2) nach einem der vorhergehenden Ansprüche, **dadurch gekennzeichnet, dass** der Schalter (10) ein einstellbarer ohmscher Widerstand ist.

10. Transponder (2) nach Anspruch 9, **dadurch gekennzeichnet, dass** der einstellbare ohmsche Widerstand einen Wert im Bereich von 0,1 bis 1 Kiloohm aufweist, um die Ansprechempfindlichkeit des Transponders (2) einzustellen.

11. Verfahren zur Herstellung eines Transponders (2) gemäß den Ansprüchen 1 bis 10.

12. Passbuch (14) mit einem Transponder (2) gemäß einem der Ansprüche 1 bis 10, mit Anspruch 4, **dadurch gekennzeichnet, dass** das Passbuch (14) so eingerichtet ist, dass im geschlossenen Zustand des Passbuchs (14) das mindestens eine Verbindungselement (22) so auf der mindestens einen Unterbrechung (24) der mindestens einen metallischen Abschirmung (4) zu liegen kommt, dass ein geschlossener Stromkreis in der mindestens einen metallischen Abschirmung (4) entsteht und damit der Transponder (2) von außen nicht ansprechbar ist.

## Claims

1. A transponder (2) comprising the following elements:
- at least one metallic shielding (4) with at least one interruption (24),
- at least one antenna coil (6) comprising at least one winding,
- at least one chip (8) connected to the at least one antenna coil (6),
- at least one switch (10) adapted to bridge the at least one interruption (24), so that a closed circuit is created in the metallic shielding (4) and the transponder (2) is not accessible from the outside, **characterized in that** the at least one antenna coil (6) is surrounded by the metallic shielding (4), **in that** the shielding (4) is either a metallic tube whose ends are disposed mutually opposite at the location of the interruption (24), but do not touch each other electroconductively, or **in that** it is composed of at least two metallic conductor paths (16, 18) disposed mutually parallel, wherein at least at the location of the interruption (24) at least one electroconductive connection (20) is arranged between the at least two metallic conductor paths (16, 18) disposed mutually parallel.

2. The transponder (2) according to claim 1, **characterized in that** the metallic shielding (4) is configured to be annular or rectangular.

3. The transponder (2) according to any of the preceding claims, **characterized in that** the interruption (24) is present on at least one metallic conductor path (16, 18).

4. The transponder (2) according to any of the preceding claims, **characterized in that** the switch (10) is at least a connecting element (22), which bridges the interruption (24).

5. The transponder (2) according to any of the preceding claims, **characterized in that** the switch (10) is an opener or a closer.

6. The transponder (2) according to any of the preceding claims, **characterized in that** the switch (10) is adapted to establish a contactless and/or a contact-bound connection.

7. The transponder (2) according to any of the preceding claims, **characterized in that** the switch (10) is adapted to establish a capacitive coupling as a contactless connection.

8. The transponder (2) according to any of the preceding claims, **characterized in that** the switch (10) is adapted to establish an ohmic connection as a contact-bound connection.

9. The transponder (2) according to any of the preceding claims, **characterized in that** the switch (10) is an adjustable ohmic resistor.

10. The transponder (2) according to claim 9, **characterized in that** the adjustable ohmic resistance has a value in the range of 0.1 to 1 kilo ohms in order to adjust the response sensitivity of the transponder (2).

11. A method for manufacturing a transponder (2) according to claims 1 to 10.

12. A passport book (14) with a transponder (2) according to any of claims 1 to 10, with claim 4, **characterized in that** the passport book (14) is adapted so that in the closed state of the passport book (14) the at least one connecting element (22) comes to lie on the at least an interruption (24) of the at least one metallic shielding (4) in such a manner that a closed circuit is created in the at least one metallic shielding (4) and thus the transponder (2) is not accessible from the outside.

## Revendications

1. Transpondeur (2) comprenant les éléments suivants :
- au moins un blindage métallique (4) ayant au moins une interruption (24),
- au moins une bobine d'antenne (6) comprenant au moins une spire,
- au moins une puce (8) reliée à la au moins une bobine d'antenne (6),
- au moins un commutateur (10) conçu pour ponter la au moins une interruption (24), de telle sorte qu'un circuit électrique fermé est engendré dans le blindage métallique (4) et que le transpondeur (2) ne peut pas, depuis l'extérieur, être amené à réagir, **caractérisé en ce que** la au moins une bobine d'antenne (6) est entourée par le blindage métallique (4), ce qui a lieu **en ce que** le blindage (4) consiste soit un tube métallique dont les extrémités se font face à l'endroit de l'interruption (24) mais ne se touchent pas de manière électroconductrice, soit en au moins deux pistes conductrices (16, 18) métalliques parallèles entres elles, cependant que, au moins à l'endroit de l'interruption (24), au moins une liaison (20) électroconductrice est agencée entre les au moins deux pistes conductrices (16, 18) métalliques parallèles entres elles.

2. Transpondeur (2) selon la revendication 1, **caractérisé en ce que** le blindage métallique (4) est réalisé sous forme annulaire ou rectangulaire.

3. Transpondeur (2) selon une des revendications précédentes, **caractérisé en ce que** l'interruption (24) se trouve sur au moins une piste conductrice (16, 18) métallique.

4. Transpondeur (2) selon une des revendications précédentes, **caractérisé en ce que** le commutateur (10) est au moins un élément de liaison (22) qui ponte l'interruption (24).

5. Transpondeur (2) selon une des revendications précédentes, **caractérisé en ce que** le commutateur (10) est une ouverture ou une fermeture.

6. Transpondeur (2) selon une des revendications précédentes, **caractérisé en ce que** le commutateur (10) est conçu pour établir une liaison sans et/ou avec contact.

7. Transpondeur (2) selon une des revendications précédentes, **caractérisé en ce que** le commutateur (10) est conçu pour établir en tant que liaison sans contact un couplage capacitif.

8. Transpondeur (2) selon une des revendications précédentes, **caractérisé en ce que** le commutateur (10) est conçu pour établir en tant qu'une liaison avec contact une liaison ohmique.

9. Transpondeur (2) selon une des revendications précédentes, **caractérisé en ce que** le commutateur (10) est une résistance ohmique réglable.

10. Transpondeur (2) selon la revendication 9, **caractérisé en ce que** la résistance ohmique réglable présente une valeur comprise entre 0,1 et 1 kiloohm pour régler la sensibilité de réaction du transpondeur (2).

11. Procédé de fabrication d'un transpondeur (2) conformément aux revendications de 1 à 10.

12. Passeport (14) comprenant un transpondeur (2) conformément à une des revendications de 1 à 10 avec la revendication 4, **caractérisé en ce que** le passeport (14) est conçu de telle façon que, à l'état fermé du passeport (14), le au moins un élément de liaison (22) se situe de telle façon sur la au moins une interruption (24) du au moins un blindage métallique (4) qu'un circuit électrique fermé est engendré dans le au moins un blindage métallique (4) et que le transpondeur (2) ne peut ainsi pas, depuis l'extérieur, être amené à réagir.
